# EUROPEAN PATENT APPLICATION

(11) **EP 4 529 261 A1**
(43) Date of publication of application: **26.03.2025**
(21) Application number: 24202018.8
(22) Date of filing: 23.09.2024
(51) Int. Cl.: H04W 24/10, H04W 24/02, H04W 64/00

(54) **UE MEASUREMENT BASED UE TRAJECTORY DATA COLLECTION**

(30) Priority: 25.09.2023 IN 202341064327
(71) Applicant: Nokia Technologies Oy, 02610 Espoo (FI)
(72) Inventor: ALWAR, Ethiraj, 560093 Bangalore (IN); PANTELIDOU, Anna, 92160 Antony (FR)
(74) Representative: Script Intellectual Property LLP

(57) **Abstract**

Embodiments of the present disclosure relate to methods, devices, apparatuses and computer readable storage medium for user equipment (UE) trajectory data collection. The method comprises: receiving, at a first apparatus and from a second apparatus, a configuration of one or more minimization of drive test (MDT) measurements associated with a trajectory of the first apparatus; performing the one or more MDT measurements at least based on the configuration; and transmitting trajectory information collected from the one or more MDT measurements to the second apparatus.

## Description

### FIELDS

Various example embodiments of the present disclosure generally relate to the field of telecommunication and in particular, to methods, devices, apparatuses and computer readable storage medium for user equipment (UE) trajectory data collection.

### BACKGROUND

Study on enhancement for data collection for New Radio (NR) and EUTRA-NR Dual Connection (EN-DC) was discussed. The general objectives of the study were to study the high-level principles for the enablement of Artificial Intelligence (AI) in Radio Access network (RAN) and the functional framework including the AI functionality and the inputs and outputs needed by a Machine Learning (ML) algorithm.

Specifically, the study aimed to identify the data needed by an AI function in the input and the data that is produced in the output, as well as the standardization impacts at a node in the existing architecture or in the network interfaces to transfer this input/output data through them. During the study, it was agreed that the use cases of energy saving, load balancing, mobility optimization/traffic steering should be first studied.

After the study, a work item started which aimed to specify data collection enhancements and signalling support within existing next generation RAN (NG-RAN) interfaces and architecture for the prioritized use cases. UE Trajectory prediction is an AI/ML enabler that can provide useful information for many use cases of interest.

### SUMMARY

In a first aspect of the present disclosure, there is provided a first apparatus. The first apparatus comprises at least one processor; and at least one memory storing instructions that, when executed by the at least one processor, cause the first apparatus at least to: receive, from a second apparatus, a configuration of one or more minimization of drive test (MDT) measurements associated with a trajectory of the first apparatus; perform the one or more MDT measurements at least based on the configuration; and transmit trajectory information collected from the one or more MDT measurements to the second apparatus.

In a second aspect of the present disclosure, there is provided a second apparatus. The second apparatus comprises at least one processor; and at least one memory storing instructions that, when executed by the at least one processor, cause the second apparatus at least to: receive, from a third apparatus, an indication of an activation for a trajectory collection; in accordance with a determination, based on the indication, that respective trajectory of at least one first apparatus is to be collected, transmit, to the at least one first apparatus, a configuration of one or more MDT measurements associated with the trajectory of the first apparatus; receive, from the at least one first apparatus, trajectory information collected from the one or more MDT measurements performed by the at least one first apparatus; and forward the trajectory information collected from the one or more MDT measurements to the third apparatus.

In a third aspect of the present disclosure, there is provided a third apparatus. The third apparatus comprises at least one processor; and at least one memory storing instructions that, when executed by the at least one processor, cause the third apparatus at least to: transmit, to a second apparatus, an indication of an activation for a trajectory collection; and receive, from the second apparatus, trajectory information collected by a first apparatus from one or more MDT measurements associated with the trajectory of the first apparatus.

In a fourth aspect of the present disclosure, there is provided a method. The method comprises: receiving, from a second apparatus, a configuration of one or more MDT measurements associated with a trajectory of the first apparatus; performing the one or more MDT measurements at least based on the configuration; and transmitting trajectory information collected from the one or more MDT measurements to the second apparatus.

In a fifth aspect of the present disclosure, there is provided a method. The method comprises: receiving, from a third apparatus, an indication of an activation for a trajectory collection; in accordance with a determination, based on the indication, that respective trajectory of at least one first apparatus is to be collected, transmitting, to the at least one first apparatus, a configuration of one or more MDT measurements associated with the trajectory of the first apparatus; receiving, from the at least one first apparatus, trajectory information collected from the one or more MDT measurements performed by the at least one first apparatus; and forwarding the trajectory information collected from the one or more MDT measurements to the third apparatus.

In a sixth aspect of the present disclosure, there is provided a method. The method comprises: transmitting, to a second apparatus, an indication of an activation for a trajectory collection; and receiving, from the second apparatus, trajectory information collected by a first apparatus from one or more MDT measurements associated with the trajectory of the first apparatus.

In a seventh aspect of the present disclosure, there is provided a first apparatus. The first apparatus comprises means for receiving, from a second apparatus, a configuration of one or more MDT measurements associated with a trajectory of the first apparatus; means for performing the one or more MDT measurements at least based on the configuration; and means for transmitting trajectory information collected from the one or more MDT measurements to the second apparatus.

In an eighth aspect of the present disclosure, there is provided a second apparatus. The second apparatus comprises means for receiving, from a third apparatus, an indication of an activation for a trajectory collection; means for, in accordance with a determination, based on the indication, that respective trajectory of at least one first apparatus is to be collected, transmitting, to the at least one first apparatus, a configuration of one or more MDT measurements associated with the trajectory of the first apparatus; means for receiving, from the at least one first apparatus, trajectory information collected from the one or more MDT measurements performed by the at least one first apparatus; and means for forwarding the trajectory information collected from the one or more MDT measurements to the third apparatus.

In a ninth aspect of the present disclosure, there is provided a third apparatus. The third apparatus comprises means for transmitting, to a second apparatus, an indication of an activation for a trajectory collection; and means for receiving, from the second apparatus, trajectory information collected by a first apparatus from one or more MDT measurements associated with the trajectory of the first apparatus.

In a tenth aspect of the present disclosure, there is provided a computer readable medium. The computer readable medium comprises instructions stored thereon for causing an apparatus to perform at least the method according to the fourth aspect.

In an eleventh aspect of the present disclosure, there is provided a computer readable medium. The computer readable medium comprises instructions stored thereon for causing an apparatus to perform at least the method according to the fifth aspect.

In a twelfth aspect of the present disclosure, there is provided a computer readable medium. The computer readable medium comprises instructions stored thereon for causing an apparatus to perform at least the method according to the sixth aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2 illustrates a signaling chart for UE trajectory data collection according to some example embodiments of the present disclosure;
FIG. 3 illustrates a signaling chart for UE trajectory data collection according to some example embodiments of the present disclosure;
FIG. 4 illustrates a signaling chart for UE trajectory data collection according to some example embodiments of the present disclosure;
FIG. 5 illustrates an example framework for MDT based UE trajectory data exposure according to some example embodiments of the present disclosure;
FIG. 6 illustrates a flowchart of a method implemented at a first apparatus according to some example embodiments of the present disclosure;
FIG. 7 illustrates a flowchart of a method implemented at a second apparatus according to some example embodiments of the present disclosure;
FIG. 8 illustrates a flowchart of a method implemented at a third apparatus according to some example embodiments of the present disclosure;
FIG. 9 illustrates a simplified block diagram of a device that is suitable for implementing example embodiments of the present disclosure; and
FIG. 10 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

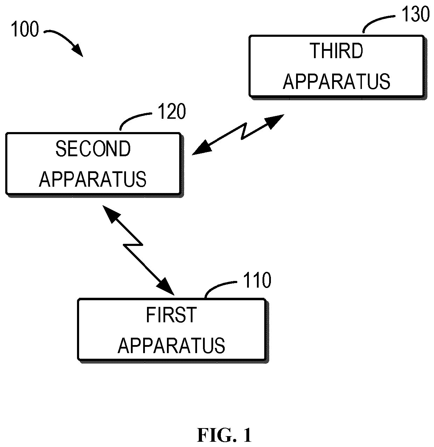

FIG. 1 illustrates an example communication environment 100 in which example embodiments of the present disclosure can be implemented. The communication environment 100 comprises a first apparatus 110 and a second apparatus 120, which may communicate with each other.

In the following, for the purpose of illustration, some example embodiments are described with the first apparatus 110 operating as a terminal device (e.g., a UE) and the second apparatus 120 operating as a radio access network device (e.g., gNB, gNB-CU, gNB-DU). However, in some example embodiments, operations described in connection with a terminal device may be implemented at a radio access network device or other device, and operations described in connection with a radio access network device may be implemented at a terminal device or other device.

It is to be understood that the number of radio access network devices and terminal devices shown in FIG. 1 is given for the purpose of illustration without suggesting any limitations. The communication network 100 may include any suitable number of radio access network devices and terminal devices.

In some example embodiments, if the first apparatus 110 is a terminal device and the second apparatus 120 is a radio access network device, a link from the second apparatus 120 to the first apparatus 110 is referred to as a downlink (DL), and a link from the first apparatus 110 to the second apparatus 120 is referred to as an uplink (UL). In DL, the second apparatus 120 is a transmitting (TX) device (or a transmitter) and the first apparatus 110 is a receiving (RX) device (or a receiver). In UL, the first apparatus 110 is a TX device (or a transmitter) and the second apparatus 120 is a RX device (or a receiver).

The communication environment 100 may further comprises a third apparatus 130. For the purpose of illustration, some example embodiments are described with the first apparatus 110 operating as an operation administration and maintenance (OAM) entity.

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

As described above, UE mobility/trajectory prediction may be useful information, e.g., it may be used as input for AI/ML-based network energy saving, AI/ML-based load balancing and AI/ML-based mobility optimization use cases to mention a few examples.

Furthermore, considering the locations of AI/ML model training and AI/ML model inference for AI/ML mobility solution, the AI/ML model training function may be deployed in OAM, while the model inference function may reside within the NG-RAN node.

UE Trajectory indicates trajectory of UE(s) in radio coverage i.e., the cells and beams visited by a UE (across the different Radio Resource Control (RRC) States), the corresponding time of stay and the detailed location information. This is a key input data for the UE trajectory prediction ML Model.

When the AIML Model Training is performed at OAM, this input data needs to become available at OAM.

The table below shows the list of UE-based MDT measurements that an NG-RAN node can configure a UE to measure and can subsequently collect and report to OAM.

**Table 1**

| **Measurement ID** | **Description** | | **Measurement Configured By** |
|---|---|---|---|
| M1 | DL signal quantities measurement results for | | gNB-CU-CP |
| | | • serving cell | |
| | | • intra-frequency/Inter-frequency/inter-RAT neighbor cells | |
| | includes cell/beam level measurement for NR cells only | | |
| M2 | Power Headroom measurement by UE | | gNB-DU |
| M3 | Not Defined for NR | | |
| M8 | RSSI measurement by UE (for WLAN/Bluetooth measurement) | | gNB-CU-CP |
| M9 | RTT Measurement by UE (for WLAN measurement) | | gNB-DU |

Furthermore, the table below shows the list of RAN-based MDT measurements that an NG-RAN node can measure and report to OAM.

**Table 2**

| **Measurement ID** | **Description** | **Measurement Configured By** |
|---|---|---|
| M4 | Data Volume measurement separately for DL and UL, per DRB per UE | gNB-CU-UP |
| M5 | Average UE throughput measurement separately for DL and UL, per DRB per UE and per UE for the DL, per DRB per UE and per UE for the UL, by gNB | gNB-DU |
| M6 | Packet Delay measurement separately for DL and UL, per DRB per UE | gNB-CU-UP & gNB-DU |
| M7 | Packet loss rate measurement separately for DL and UL, per DRB per UE | gNB-CU-UP & gNB-DU |

As shown above, currently there are no mechanisms e.g., through the MDT framework that enable RAN to expose UE trajectory data to OAM. Hence, currently there is no trajectory related data available in OAM to enable offline training at OAM for UE Trajectory prediction.

Therefore, there is a need to collect the necessary input data related to cell/beam level UE trajectory at OAM to enable offline training at OAM based on MDT Framework.

Some example embodiments of the present disclosure propose a mechanism to collect to the UE trajectory input data at OAM. In this solution, the OAM transmits to the RAN device an indication of an activation for a trajectory collection. If the RAN device determines the trajectory of at least one terminal device is to be collected, transmit a configuration of MDT measurements associated with a trajectory of the at least one terminal device. The at least one terminal device perform the MDT measurements and transmit trajectory information collected from the measurements to the RAN device. The RAN device then sends the MDT records of the trajectory information to the OAM.

Example embodiments of the present disclosure will be described in detail below with reference to the accompanying drawings.

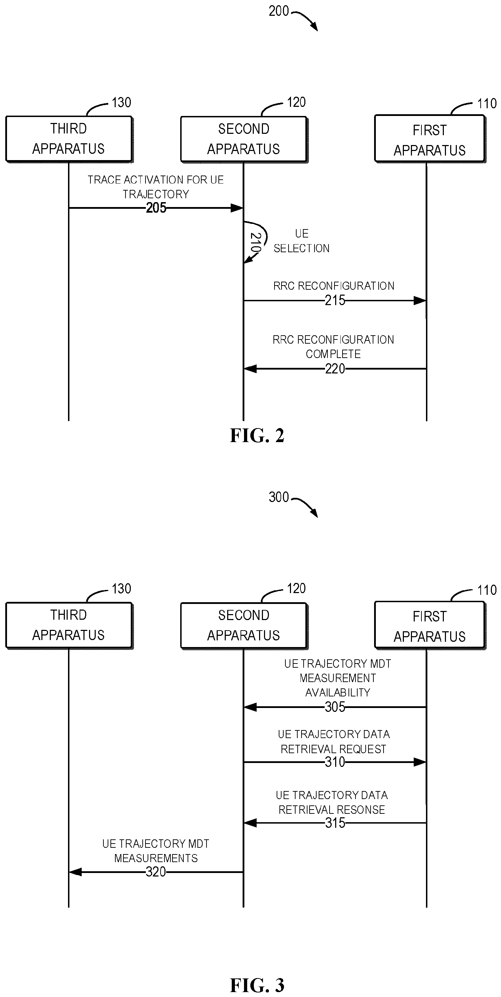

FIG. 2 illustrates a signaling chart 200 for UE trajectory data collection according to some example embodiments of the present disclosure. For the purposes of discussion, the signaling chart 200 will be discussed with reference to FIG. 1, for example, by using the first apparatus 110 (e.g., a UE), the second apparatus 120 (e.g., a gNB or a gNB-CU-control plane (CP)) and the third apparatus 130.

As shown in FIG. 2, the third apparatus 130 transmits (205), to the second apparatus 120, an indication for initiating MDT measurements for UE trajectory data collection. The trace activation procedure enables the third apparatus 130 to trigger the second apparatus 120 to collect the corresponding measurements.

For example, the indication may indicate a granularity of the UE trajectory collection, e.g., the cell level trajectory is required for one or more cells and/or the beam level trajectory is required for one or more beams.

For the cell level trajectory, the indication may also comprise a list of cells associated with the cell level trajectory, for example, identifiers that could identify a set of cells. For the beam level trajectory, the indication may also comprise a list of beams associated with the beam level trajectory, for example, identifiers that could identify a set of beams.

After receiving the indication from the third apparatus 130, the second apparatus 120 may select (210) at least one UE to collect UE trajectory information.

As an option, the UE trajectory data may be collected from all UE(s). That is, each UE camping on applicable nodes/cells may be selected to perform the trajectory collection.

As another option, it is also possible that the second apparatus 120 may select specific UE(s) from which the data is collected. For example, a UE can be configured in such a way that the UE trajectory MDT measurement is configured to be collected based on specific criteria or events such as collect UE trajectory measurements from UE(s) that encounter a Mobility Robustness Optimization (MRO) event frequency such as too early or too late handover or ping-pong.

Alternatively, UE trajectory information may be collected from UE(s) that have frequent cell or beam changes. Those frequent changes can be determined by comparing the cell or beam changes to a threshold configured by an NG-RAN node or by a threshold that may be provided by the third apparatus 130.

Alternatively, UE trajectory information may be collected only from UE(s) that are camped on a specific cell or beam. Such cell or beam can be a cell or beam which is about to be de-activated due to a network energy saving action. Besides the second apparatus 120, the UEs may alternatively be selected by the third apparatus 130 by providing to the second apparatus 120 in the MDT configuration criteria over which the selected UEs should satisfy.

Therefore, the third apparatus 130 may indicate that beam-based UE trajectory information may be collected within a specific cell that for example is activated to see how the traffic will move over the new cell. The second apparatus 120 may in this case configure MDT measurements for UE trajectory data collection only for UEs that are camped on this cell.

As another alternative, the third apparatus 130 may include conditions related to frequent cell changes and corresponding thresholds. The second apparatus 120 receiving these conditions measures the cell changes over different UEs and selects only those UEs that have a number of cell changes higher than the configured threshold. Similar conditions may be defined also for MRO event frequency and be provided to the second apparatus together with a corresponding threshold so that the second apparatus 120 only configures UEs exceeding a MRO threshold to report UE Trajectory information.

For UE Group/Cluster Configuration based on per-UE events, the third apparatus 130 configures the thresholds for the UE-specific events such as MRO events or cell change events or beam change events. The threshold configuration includes the rate of change i.e., the number of events in a given duration - N number of events in a duration T. Threshold configuration can be different for each type of event.

Considering that the third apparatus 130 has configured the threshold as 5 handover events in 60 seconds. Whenever the first handover event is encountered for a given UE, the second apparatus 120 starts a timer with the configured value T. Upon each subsequent handover, the count is incremented. When the timer expires, the second apparatus 120 checks if the number of events that occurred for the UE is greater than the configured threshold. If yes, the second apparatus 120 selects this UE for configuring the UE trajectory data collection. If not, the UE is not selected.

For UE Group/Cluster Configuration based on per-cell/beam events, the third apparatus 130 can trigger data collection at specific cell/beam level i.e., UE trajectory is collected from all the UE(s) camped in those specific cells/beams. When activation/deactivation of specific cells/beam is triggered or load balancing action is triggered, it causes the UE to be offloaded across cells/beams. The third apparatus 130 monitors the impact of such actions using the Energy Consumption metrics. If the energy consumption is impacted by a specific threshold, the third apparatus 130 can then trigger the second apparatus 120 to collect UE trajectory data when such actions are triggered. The third apparatus 130 can further analyze the trends of UE movements across the cells/beams to further trouble-shoot the impact on energy consumption.

If the second apparatus 120 selects the first apparatus 110 as a target UE for the UE trajectory collection, the second apparatus 120 may transmit (215), to the first apparatus 110, a configuration of one or more MDT measurements associated with the trajectory of the first apparatus.

For example, the configuration may indicate the first apparatus 110 to perform MDT measurement(s) associated with a cell level trajectory and/or MDT measurement(s) associated with a beam level trajectory.

An example of the configuration of one or more MDT measurements associated with UE trajectory is listed as below:

**Table 3**

| MDT Measurement ID | Description | Measured at | Measurement reported by |
|---|---|---|---|
| Mx | Cell Level UE Trajectory containing the Visited Cells, Time of stay and (optionally) detailed location information in each cell | UE | gNB-CU-CP |
| My | Beam level UE Trajectory containing the visited beams, time of stay and (optionally) detailed location information in each beam | UE | gNB-CU-CP |
| Mz | Cell Level and Beam Level UE Trajectory | UE | gNB-CU-CP |

As shown, the configuration of one or more MDT measurements associated with the UE trajectory indicates an identifier of each MDT measurement and the corresponding description. For example, for MDT measurement Mx, the configuration indicates the first apparatus 110, for the cell level UE trajectory, should collect the cell(s) it has visited, the time period within which the first apparatus is served by the cell(s), i.e., "Time of Stay", and optionally detailed location information in each cell.

For the MDT measurement My, the configuration indicates the first apparatus 110, for the beam level UE trajectory, should collect the beam(s) it has visited, the time period within which the first apparatus is swept by the beam(s), i.e., "Time of Stay", and optionally detailed location information in each beam.

For the MDT measurement Mz, the configuration indicates the first apparatus 110 to perform both cell level UE trajectory and beam level UE trajectory measurements.

Furthermore, the configuration further indicates the entity by which the MDT measurement(s) are to be performed (i.e., the first apparatus 110) and to which the measurement report should be reported (i.e., the second apparatus 120).

In some embodiments, the second apparatus 120 may transmit (215) the configuration of one or more MDT measurements associated with the UE trajectory to the first apparatus 110 via a RRC reconfiguration message. After receiving the RRC reconfiguration message including the configuration, the first apparatus 110 may respond (220) to the second apparatus 120 with an acknowledgement (ACK).

In some scenarios, a process of UE trajectory MDT data retrieval from UE may be accomplished by enhancing the existing "MDT Data Availability Indication" when the new MDT measurements are available and thereby enabling the RAN to collect them. This process will be described with reference to FIG. 3, which illustrates a signaling chart 300 for UE trajectory data collection according to some example embodiments of the present disclosure. For the purposes of discussion, the signaling chart 300 will be discussed with reference to FIG. 1, for example, by using the first apparatus 110 (e.g., a UE), the second apparatus 120 (e.g., a gNB-CU-CP) and the third apparatus 130.

As shown in FIG. 3, The first apparatus 110 transmits (305), to the second apparatus, an indication of an availability of the one or more MDT measurements to indicate new MDT measurement(s) are available or that there are new collected trajectory data associated with the new MDT measurement(s) buffered at the first apparatus 110.

Then the second apparatus 120 may transmit (310) a request of retrieving the trajectory information (i.e., *UE Trajectory Data Retrieval Request)* to the first apparatus 110 to retrieve the collected trajectory data from the first apparatus 110.

The first apparatus 110 may respond (315) the *UE Trajectory Data Retrieval Request* with a *UE Trajectory Data Retrieval Response* including the collected trajectory data. After the collected trajectory data has been reported (as collected or after further processing to extract specific features) to the second apparatus 120, the corresponding trace session record can be reported (320) from the second apparatus 120 to the third apparatus 130. An example of raw data collected and reported by the first apparatus 110 is shown below, wherein Table 4 relates to data collected from a cell level trajectory and Table 5 relates to data collected from a beam level trajectory.

**Table 4**

| UE Identity | Time of stay in Cell 1 (time units) | Time of stay in Cell 2 (time units) | Time of stay in Cell 3 (time units) |
|---|---|---|---|
| UE 1 | 200 | 300 | 100 |
| UE2 | . 300 | . 200 | . 300 |
| . UE3 | . 400 | . 400 | . 400 |

**Table 5**

| . UE Identity | . Time of stay in Cell 1. Beam1 (time units) | . Time of stay in Cell 1. Beam 2 (time units) | . Time of stay in Cell 1. Beam 3 (time units) |
|---|---|---|---|
| . UE1 | . 50 | . 50 | . 100 |
| . UE2 | . 30 | . 30 | . 200 |
| . UE3 | . 100 | . 50 | . 150 |

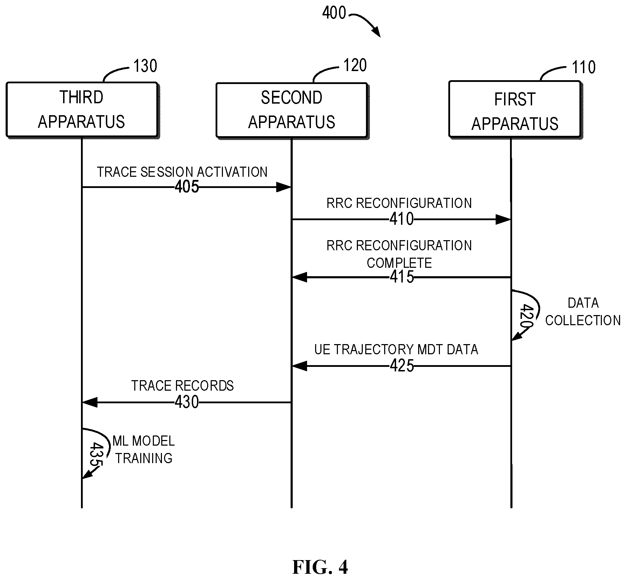

Now the reference is made to FIG. 4, which illustrates a signaling chart 400 for UE trajectory data collection according to some example embodiments of the present disclosure. For the purposes of discussion, the signaling chart 200 will be discussed with reference to FIG. 1, for example, by using the first apparatus 110 (e.g., a UE), the second apparatus 120 (e.g., a gNB-CU-CP) and the third apparatus 130. With reference to FIG. 4, a process including the trace session triggering, MDT measurement(s) configuring, and UE trajectory information collection and report will be further described.

As shown in FIG. 4, the UE Trajectory Prediction ML Model Training may be configured in the third apparatus 130 by e.g., operator. Furthermore, the UE Trajectory Prediction ML Model scope (cell beam or beam level trajectory) and the specific set of RAN Nodes and cells which are candidates for the data collection may be determined as well as possible conditions defined by the OAM to enable NG-RAN node selects the UEs to provide UE trajectory information.

Then the third apparatus 130 may activate (405) the trace session in the selected NG-RAN nodes/cells (e.g., the second apparatus 120).

As described, the third apparatus 130 may indicate a granularity of the UE trajectory collection, e.g., the cell level trajectory is required and/or the beam level trajectory is required. The third apparatus 130 may also indicate a list of cells associated with the cell level trajectory, for example, identifiers of the cells in the list, for the cell level trajectory and/or a list of beams associated with the beam level trajectory, for example, identifiers of the beams in the list, for the beam level trajectory.

After selecting the first apparatus 110 as the target UE for the trajectory, the second apparatus 120 may configure (410), to the first apparatus 110, one or more MDT measurements associated with the trajectory of the first apparatus 110. For example, the configuration may indicate the first apparatus 110 to perform MDT measurement(s) associated with a cell level trajectory and/or MDT measurement(s) associated with a beam level trajectory. The details of the configured MDT measurement(s) have been described with Table 3, which will be omitted here.

As described above, the second apparatus 120 may transmit the configuration of one or more MDT measurements associated with the UE trajectory to the first apparatus 110 via a RRC reconfiguration message. After receiving the RRC reconfiguration message including the configuration, the first apparatus 110 may respond (415) with the RRC reconfiguration complete message to the second apparatus 120.

Then the first apparatus 110 may starts (420) the trajectory data collection based on the configuration of the one or more MDT measurements associated with the UE trajectory.

For example, if the beam level MDT measurement information is requested to be collected, the first apparatus 110 may monitor the beam mobility and the visited time whenever the beam mobility events occur. For example, when the first apparatus 110 camps on beam 1, the first apparatus 110 may store the time stamp (time stamp 1). When the first apparatus 110 moves to beam 2, the first apparatus 110 may store the time stamp (time stamp 2). The first apparatus 110 then may calculate the visited time for beam 1 as the difference between the time stamp 2 and time stamp 1 and create a new MDT measurement including the collected data.

Similarly, if a cell level measurement is configured, the first apparatus 110 may monitor the cell mobility and the visited time whenever the cell level mobility events occur and creates a new MDT measurement including the collected data.

If both cell and beam measurements are configured, the first apparatus 110 may create MDT records for both.

Then the first apparatus 110 may transmit (425) the collected trajectory information to the second apparatus 120. The details of data collected and reported by the first apparatus 110 has been described with Tables 4 and 5, which will be omitted here.

The second apparatus 120 transmits (430) the trajectory data collected and reported by the first apparatus 110 to the third apparatus 130 as the trace record. Then the third apparatus 130 may use (435) the collected trajectory data for training the UE trajectory ML model at the third apparatus 130.

The collected UE Trajectory data may be passed as input to the UE trajectory ML model. The UE trajectory ML model may build a relationship between the time spent in a cell and next cell visited.

For each UE for which mobility history (trajectory data) is collected, the data may be categorized per UE Trajectory as follows:

**Table 6**

| . Cell Trajectory | . Range of Average time of stay | . Number of UE(s) |
|---|---|---|
| . Cell 1- Cell 2 | XX | UE1, UE2 |
| . Cell 1- Cell 2 | YY | UE3 |

**Table 7**

| . Beam Trajectory | . Range of Average time of stay | . Number of UE(s) |
|---|---|---|
| . Cell 1. Beam 1-Beam 2 | . XX | . UE1, UE2 |
| . Cell 1. Beam 1-Beam 3 | . YY | . UE3 |

With the above information, the third apparatus 130 may model the number of UE(s) that are traversing a cell level or beam level trajectory at a given time stamp.

It is to be understood that the ML model may also be deployed at the NG-RAN node. When this ML Model is deployed in the second apparatus 120, it is possible for the NG-RAN node to predict the active UE count moving in a specific UE trajectory at a given time.

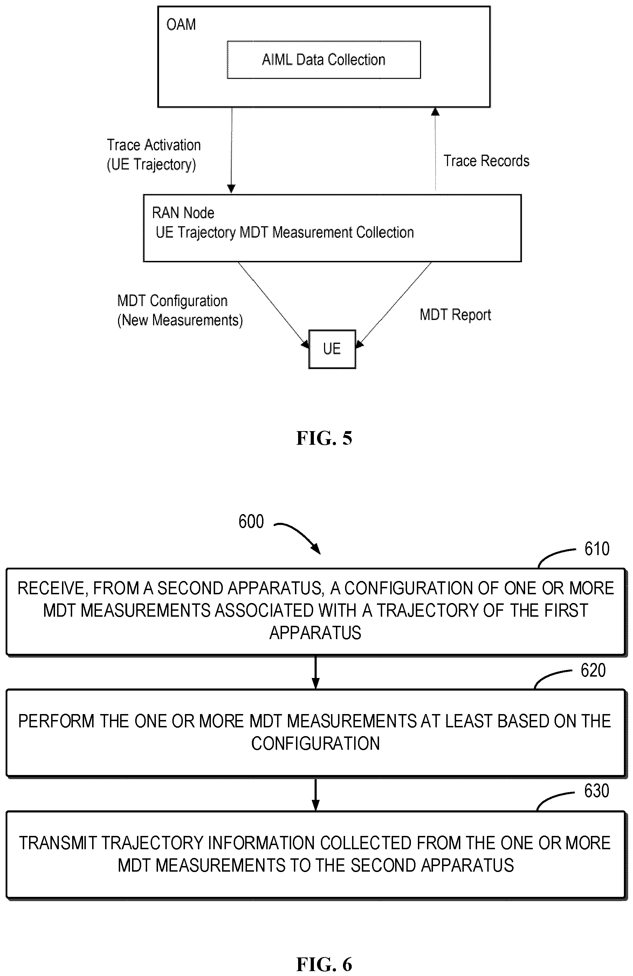

In this way, the solution of the present disclosure provides a solution to enable a NG-RAN node to report UE trajectory related measurements to OAM. This is done by introducing new MDT measurements "UE Trajectory" that enables OAM to trigger UE trajectory collection from the NG-RAN node. The NG-RAN node configures the UE to collect and report these measurements. The collected UE trajectory is subsequently reported through MDT report to OAM via the NG-RAN node. This process is shown in FIG. 5.

Therefore, the solution of the present disclosure achieves the following mechanisms:
A Mechanism for OAM to activate new Trace for UE Trajectory Data. Trace Activation shall include provision to collect Cell Level UE Trajectory or Beam Level UE Trajectory or both.

A Mechanism for NG-RAN node to configure new MDT Measurements for UE Trajectory data collection.

A Mechanism for UE to collect and report configured new MDT Measurements.

A Mechanism for the RAN Node to report the corresponding Trace Session Records to the OAM.

In this way, OAM can obtain the UE Trajectory input data samples to train UE Trajectory ML Model, which may improve the performance of the ML Model and the accuracy of the UE trajectory prediction.

FIG. 6 shows a flowchart of an example method 600 implemented at a first apparatus in accordance with some example embodiments of the present disclosure. For the purpose of discussion, the method 600 will be described from the perspective of the first apparatus 110 in FIG. 1.

At block 610, the first apparatus 110 receives, from a second apparatus, a configuration of one or more MDT measurements associated with a trajectory of the first apparatus.

At block 620, the first apparatus 110 performs the one or more MDT measurements at least based on the configuration.

At block 630, the first apparatus 110 transmits trajectory information collected from the one or more MDT measurements to the second apparatus.

In some example embodiments, the configuration of the one or more MDT measurements indicates the first apparatus to perform at least one of: an MDT measurement associated with a cell level trajectory related to one or more cells associated with the first apparatus, or an MDT measurement associated with a beam level trajectory related to one or more beams associated with of the first apparatus.

In some example embodiments, the method 600 further comprises: transmitting, to the second apparatus, the trajectory information collected from MDT measurements associated with a cell level trajectory, the trajectory information comprising at least one of the following: one or more cells the first apparatus has visited, respective time periods within which the first apparatus is served by the one or more cells, and optionally location information of the first apparatus in the one or more cells.

In some example embodiments, the method 600 further comprises: transmitting, to the second apparatus, the trajectory information collected from MDT measurements associated with the beam level trajectory, the trajectory information comprising at least one of the following: one or more beams the first apparatus has visited, respective time periods within which the first apparatus is swept by the one or more beams, location information of the first apparatus in the one or more beams.

In some example embodiments, the method 600 further comprises: receiving, from the second apparatus, the configuration of the one or more MDT measurements via a radio resource control signaling.

In some example embodiments, the method 600 further comprises: transmitting, to the second apparatus, an indication of an availability of the one or more MDT measurements; and in response receiving, from the second apparatus, a request of retrieving the trajectory information, transmitting the trajectory information to the second apparatus.

In some example embodiments, the first apparatus comprises a terminal device and the second apparatus comprises a radio access network device.

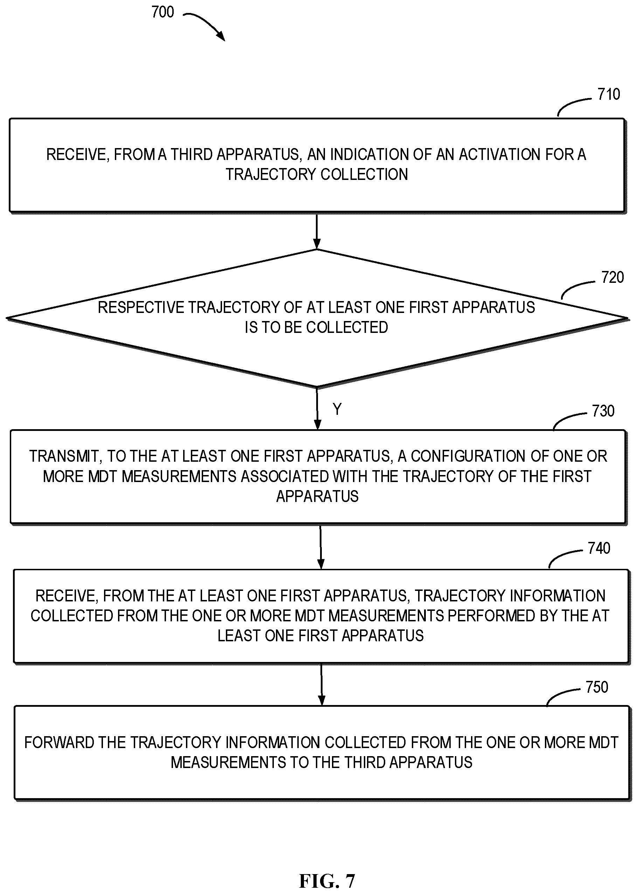

FIG. 7 shows a flowchart of an example method 700 implemented at a second apparatus in accordance with some example embodiments of the present disclosure. For the purpose of discussion, the method 700 will be described from the perspective of the second apparatus 120 in FIG. 1.

At block 710, the second apparatus 120 receives, from a third apparatus, an indication of an activation for a trajectory collection.

At block 720, if the second apparatus 120 determines, based on the indication, that respective trajectory of at least one first apparatus is to be collected, at block 730, the second apparatus 120 transmits, to the at least one first apparatus, a configuration of one or more MDT measurements associated with the trajectory of the first apparatus.

At block 740, the second apparatus 120 receives, from the at least one first apparatus, trajectory information collected from the one or more MDT measurements performed by the at least one first apparatus.

At block 750, the second apparatus 120 forwards the trajectory information collected from the one or more MDT measurements to the third apparatus.

In some example embodiments, the indication of the activation for a trajectory collection indicates at least one of the following: a cell level trajectory is required for one or more cells, or a beam level trajectory is required for one or more beams or both the beam level trajectory and the cell level trajectory are required across the one or more beams for the one or more cell.

In some example embodiments, the configuration of the one or more MDT measurements indicates the first apparatus to perform at least one of: an MDT measurement associated with a cell level trajectory related to one or more cells associated with the first apparatus, or an MDT measurement associated with a beam level trajectory related to one or more beams associated with of the first apparatus.

In some example embodiments, the method 700 further comprises: receiving, from the first apparatus, the trajectory information collected from MDT measurements associated with a cell level trajectory, the trajectory information comprising at least one of the following: one or more cells the first apparatus has visited, respective time periods within which the first apparatus is served by the one or more cells, and optionally location information of the first apparatus in the one or more cells.

In some example embodiments, the method 700 further comprises: receiving, from the first apparatus, the trajectory information collected from MDT measurements associated with beam level trajectory, the trajectory information comprising at least one of the following: one or more beams the first apparatus has visited, respective time periods within which the first apparatus is swept by the one or more beams, and optionally location information of the first apparatus in the one or more beams.

In some example embodiments, the method 700 further comprises: transmitting, to the first apparatus, the configuration of the one or more MDT measurements via a radio resource control signaling.

In some example embodiments, the method 700 further comprises: receiving, from the first apparatus, an indication of an availability of the one or more MDT measurements; and transmitting, to the first apparatus, a request of retrieving the trajectory information.

In some example embodiments, the method 600 further comprises: receiving, from the third apparatus, an indication of one or more conditions associated with at least one user equipment and/or network specific event; and in accordance with a determination that the one or more conditions is satisfied at the at least one first apparatus, determining that respective trajectory of the at least one first apparatus is to be collected.

In some example embodiments, the first apparatus comprises a terminal device, the second apparatus comprises a radio access network device, and the third apparatus comprises an operation administration and maintenance entity.

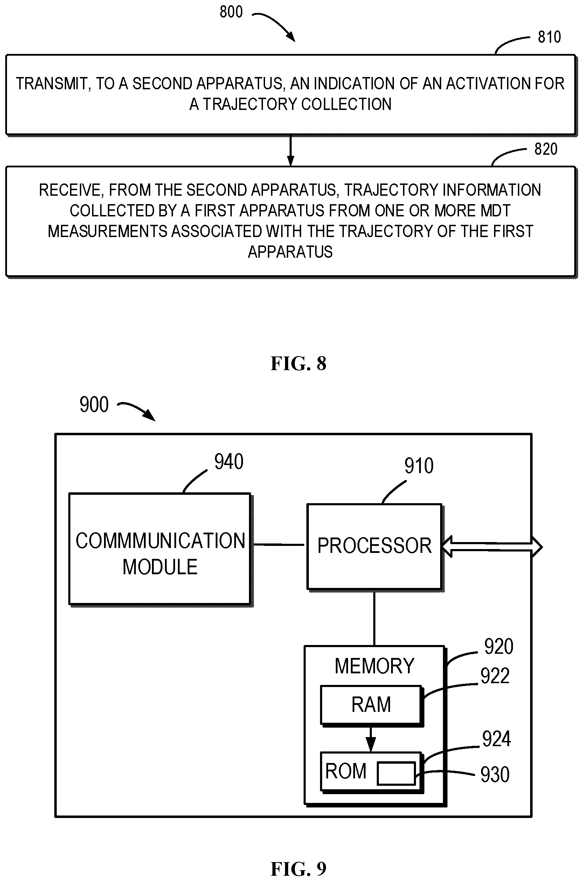

FIG. 8 shows a flowchart of an example method 800 implemented at a third apparatus in accordance with some example embodiments of the present disclosure. For the purpose of discussion, the method 800 will be described from the perspective of the third apparatus 130 in FIG. 1.

At block 810, the third apparatus 130 transmits, to a second apparatus, an indication of an activation for a trajectory collection.

At block 820, the third apparatus 130 receives, from the second apparatus, trajectory information collected by a first apparatus from one or more MDT measurements associated with the trajectory of the first apparatus.

In some example embodiments, the indication of the activation for a trajectory collection indicates at least one of the following: a cell level trajectory is required for one or more cells, or a beam level trajectory is required for one or more beams or both the beam level trajectory and the cell level trajectory are required across the one or more beams for the one or more cell.

In some example embodiments, the trajectory information collected from MDT measurements associated with the cell level trajectory comprises: one or more cells the first apparatus has visited, respective time periods within which the first apparatus is served by the one or more cells, and optionally location information of the first apparatus in the one or more cells.

In some example embodiments, the trajectory information collected from MDT measurements associated with the beam level trajectory comprises: one or more beams the first apparatus has visited, respective time periods within which the first apparatus is swept by the one or more beams, location information of the first apparatus in the one or more beams.

In some example embodiments, the method 800 further comprises: transmitting, to the second apparatus, an indication of one or more conditions associated with at least one user equipment and/or network specific event.

In some example embodiments, the method 800 further comprises: performing a training of a machine learning model for user equipment trajectory prediction based on the received trajectory information, wherein the input of the machine learning model is the received trajectory information and the output of the machine learning mode is a predicted trajectory in cell level and/or in beam level.

In some example embodiments, the first apparatus comprises a terminal device, the second apparatus comprises a radio access network device, and the third apparatus comprises an operation administration and maintenance entity.

In some example embodiments, a first apparatus capable of performing any of the method 600 (for example, the first apparatus 110 in FIG. 1) may comprise means for performing the respective operations of the method 600. The means may be implemented in any suitable form. For example, the means may be implemented in a circuitry or software module. The first apparatus may be implemented as or included in the first apparatus 110 in FIG. 1.

In some example embodiments, the first apparatus comprises means for receiving, from a second apparatus, a configuration of one or more MDT measurements associated with a trajectory of the first apparatus; means for performing the one or more MDT measurements at least based on the configuration; and means for transmitting trajectory information collected from the one or more MDT measurements to the second apparatus.

In some example embodiments, the configuration of the one or more MDT measurements indicates the first apparatus to perform at least one of: an MDT measurement associated with a cell level trajectory related to one or more cells associated with the first apparatus, or an MDT measurement associated with a beam level trajectory related to one or more beams associated with of the first apparatus.

In some example embodiments, the first apparatus further comprises: means for transmitting, to the second apparatus, the trajectory information collected from MDT measurements associated with a cell level trajectory, the trajectory information comprising at least one of the following: one or more cells the first apparatus has visited, respective time periods within which the first apparatus is served by the one or more cells, location information of the first apparatus in the one or more cells.

In some example embodiments, the first apparatus further comprises: means for transmitting, to the second apparatus, the trajectory information collected from MDT measurements associated with the beam level trajectory, the trajectory information comprising at least one of the following: one or more beams the first apparatus has visited, respective time periods within which the first apparatus is swept by the one or more beams, location information of the first apparatus in the one or more beams.

In some example embodiments, the first apparatus further comprises: means for receiving, from the second apparatus, the configuration of the one or more MDT measurements via a radio resource control signaling.

In some example embodiments, the first apparatus further comprises: means for transmitting, to the second apparatus, an indication of an availability of the one or more MDT measurements; and means for, in response to receiving, from the second apparatus, a request of retrieving the trajectory information, transmitting the trajectory information to the second apparatus.

In some example embodiments, the first apparatus comprises a terminal device and the second apparatus comprises a radio access network device.

In some example embodiments, the first apparatus further comprises means for performing other operations in some example embodiments of the method 600 or the first apparatus 110. In some example embodiments, the means comprises at least one processor; and at least one memory storing instructions that, when executed by the at least one processor, cause the first apparatus to perform corresponding operations.

In some example embodiments, a second apparatus capable of performing any of the method 700 (for example, the second apparatus 120 in FIG. 1) may comprise means for performing the respective operations of the method 700. The means may be implemented in any suitable form. For example, the means may be implemented in a circuitry or software module. The second apparatus may be implemented as or included in the second apparatus 120 in FIG. 1.

In some example embodiments, the second apparatus comprises means for receiving, from a third apparatus, an indication of an activation for a trajectory collection; means for, in accordance with a determination, based on the indication, that respective trajectory of at least one first apparatus is to be collected, transmitting, to the at least one first apparatus, a configuration of one or more MDT measurements associated with the trajectory of the first apparatus; means for receiving, from the at least one first apparatus, trajectory information collected from the one or more MDT measurements performed by the at least one first apparatus; and means for forwarding the trajectory information collected from the one or more MDT measurements to the third apparatus.

In some example embodiments, the indication of the activation for a trajectory collection indicates at least one of the following: a cell level trajectory is required for one or more cells, or a beam level trajectory is required for one or more beams or both the beam level trajectory and the cell level trajectory are required across the one or more beams for the one or more cell.

In some example embodiments, the configuration of the one or more MDT measurements indicates the first apparatus to perform at least one of: an MDT measurement associated with a cell level trajectory related to one or more cells associated with the first apparatus, or an MDT measurement associated with a beam level trajectory related to one or more beams associated with of the first apparatus.

In some example embodiments, the second apparatus further comprises: means for receiving, from the first apparatus, the trajectory information collected from MDT measurements associated with a cell level trajectory, the trajectory information comprising at least one of the following: one or more cells the first apparatus has visited, respective time periods within which the first apparatus is served by the one or more cells, and optionally location information of the first apparatus in the one or more cells.

In some example embodiments, the second apparatus further comprises: means for receiving, from the first apparatus, the trajectory information collected from MDT measurements associated with beam level trajectory, the trajectory information comprising at least one of the following: one or more beams the first apparatus has visited, respective time periods within which the first apparatus is swept by the one or more beams, and optionally location information of the first apparatus in the one or more beams.

In some example embodiments, the second apparatus further comprises: means for transmitting, to the first apparatus, the configuration of the one or more MDT measurements via a radio resource control signaling.

In some example embodiments, the second apparatus further comprises: means for receiving, from the first apparatus, an indication of an availability of the one or more MDT measurements; and means for transmitting, to the first apparatus, a request of retrieving the trajectory information.

In some example embodiments, the second apparatus further comprises: means for receiving, from the third apparatus, an indication of one or more conditions associated with at least one user equipment and/or network specific event; and means for, in accordance with a determination that the one or more conditions is satisfied at the at least one first apparatus, determining that respective trajectory of the at least one first apparatus is to be collected.

In some example embodiments, the first apparatus comprises a terminal device, the second apparatus comprises a radio access network device, and the third apparatus comprises an operation administration and maintenance entity.

In some example embodiments, the second apparatus further comprises means for performing other operations in some example embodiments of the method 700 or the second apparatus 120. In some example embodiments, the means comprise at least one processor; and at least one memory storing instructions that, when executed by the at least one processor, cause the second apparatus to perform corresponding operations.

In some example embodiments, a third apparatus capable of performing any of the method 800 (for example, the third apparatus 130 in FIG. 1) may comprise means for performing the respective operations of the method 800. The means may be implemented in any suitable form. For example, the means may be implemented in a circuitry or software module. The third apparatus may be implemented as or included in the third apparatus 130 in FIG. 1.

In some example embodiments, the third apparatus comprises means for transmitting, to a second apparatus, an indication of an activation for a trajectory collection; and means for receiving, from the second apparatus, trajectory information collected by a first apparatus from one or more MDT measurements associated with the trajectory of the first apparatus.

In some example embodiments, the indication of the activation for a trajectory collection indicates at least one of the following: a cell level trajectory is required for one or more cells, or a beam level trajectory is required for one or more beams or both the beam level trajectory and the cell level trajectory are required across the one or more beams for the one or more cell.

In some example embodiments, the trajectory information collected from MDT measurements associated with the cell level trajectory comprises: one or more cells the first apparatus has visited, respective time periods within which the first apparatus is served by the one or more cells, and optionally location information of the first apparatus in the one or more cells.

In some example embodiments, the trajectory information collected from MDT measurements associated with the beam level trajectory comprises: one or more beams the first apparatus has visited, respective time periods within which the first apparatus is swept by the one or more beams, and optionally location information of the first apparatus in the one or more beams.

In some example embodiments, the third apparatus further comprises: means for performing a training of a machine learning model for user equipment trajectory prediction based on the received trajectory information, wherein the input of the machine learning model is the received trajectory information and the output of the machine learning mode is a predicted trajectory in cell level and/or in beam level granularity.

In some example embodiments, the third apparatus further comprises: means for transmitting, to the second apparatus, an indication of one or more conditions associated with at least one user equipment and/or network specific event.

In some example embodiments, the first apparatus comprises a terminal device, the second apparatus comprises a radio access network device, and the third apparatus comprises an operation administration and maintenance entity.

In some example embodiments, the third apparatus further comprises means for performing other operations in some example embodiments of the method 800 or the third apparatus 130. In some example embodiments, the means comprises at least one processor; and at least one memory storing instructions that, when executed by the at least one processor, cause the third apparatus to perform corresponding operations.

FIG. 9 is a simplified block diagram of a device 900 that is suitable for implementing example embodiments of the present disclosure. The device 900 may be provided to implement a communication device, for example, the first apparatus 110 or the second apparatus 120 as shown in FIG. 1. As shown, the device 900 includes one or more processors 910, one or more memories 920 coupled to the processor 910, and one or more communication modules 940 coupled to the processor 910.

The communication module 940 is for bidirectional communications. The communication module 940 has one or more communication interfaces to facilitate communication with one or more other modules or devices. The communication interfaces may represent any interface that is necessary for communication with other network elements. In some example embodiments, the communication module 940 may include at least one antenna.

The processor 910 may be of any type suitable to the local technical network and may include one or more of the following: general purpose computers, special purpose computers, microprocessors, digital signal processors (DSPs) and processors based on multicore processor architecture, as non-limiting examples. The device 900 may have multiple processors, such as an application specific integrated circuit chip that is slaved in time to a clock which synchronizes the main processor.

The memory 920 may include one or more non-volatile memories and one or more volatile memories. Examples of the non-volatile memories include, but are not limited to, a Read Only Memory (ROM) 924, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 922 and other volatile memories that will not last in the power-down duration.

A computer program 930 includes computer executable instructions that are executed by the associated processor 910. The instructions of the program 930 may include instructions for performing operations/acts of some example embodiments of the present disclosure. The program 930 may be stored in the memory, e.g., the ROM 924. The processor 910 may perform any suitable actions and processing by loading the program 930 into the RAM 922.

The example embodiments of the present disclosure may be implemented by means of the program 930 so that the device 900 may perform any process of the disclosure as discussed with reference to FIG. 2 to FIG. 8. The example embodiments of the present disclosure may also be implemented by hardware or by a combination of software and hardware.

In some example embodiments, the program 930 may be tangibly contained in a computer readable medium which may be included in the device 900 (such as in the memory 920) or other storage devices that are accessible by the device 900. The device 900 may load the program 930 from the computer readable medium to the RAM 922 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

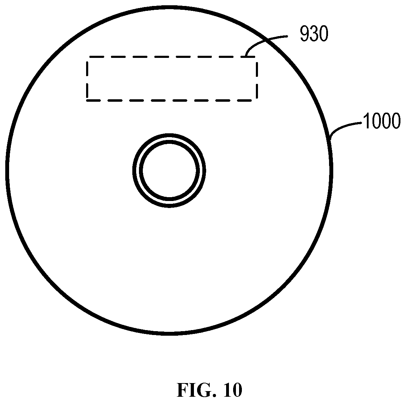

FIG. 10 shows an example of the computer readable medium 1000 which may be in form of CD, DVD or other optical storage disk. The computer readable medium 1000 has the program 930 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general-purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination. Various respective aspects and embodiments are described in the following numbered paragraphs.
1. A first apparatus comprising:
   at least one processor; and
   at least one memory storing instructions that, when executed by the at least one processor, cause the first apparatus at least to:
      receive, from a second apparatus, a configuration of one or more minimization of drive test, MDT, measurements associated with a trajectory of the first apparatus;
      perform the one or more MDT measurements at least based on the configuration; and
      transmit trajectory information collected from the one or more MDT measurements to the second apparatus.
2. The first apparatus of paragraph 1, wherein the configuration of the one or more MDT measurements indicates the first apparatus to perform at least one of:
   an MDT measurement associated with a cell level trajectory related to one or more cells associated with the first apparatus, or
   an MDT measurement associated with a beam level trajectory related to one or more beams associated with of the first apparatus.
3. The first apparatus of paragraph 1 or 2, wherein the first apparatus is caused to:
   transmit, to the second apparatus, the trajectory information collected from MDT measurements associated with a cell level trajectory, the trajectory information comprising at least one of the following:
   one or more cells the first apparatus has visited,
   respective time periods within which the first apparatus is served by the one or more cells,
   location information of the first apparatus in the one or more cells.
4. The first apparatus of paragraph 1 or 2, wherein the first apparatus is caused to:
   transmit, to the second apparatus, the trajectory information collected from MDT measurements associated with the beam level trajectory, the trajectory information comprising at least one of the following:
   one or more beams the first apparatus has visited,
   respective time periods within which the first apparatus is swept by the one or more beams,
   location information of the first apparatus in the one or more beams.
5. The first apparatus of any of paragraphs 1-4, wherein the first apparatus is caused to:
   receive, from the second apparatus, the configuration of the one or more MDT measurements via a radio resource control signaling.
6. The first apparatus of any of paragraphs 1-5, wherein the first apparatus is caused to:
   transmit, to the second apparatus, an indication of an availability of the one or more MDT measurements; and
   in response to receiving, from the second apparatus, a request of retrieving the trajectory information, transmit the trajectory information to the second apparatus.
7. The first apparatus of any of paragraphs 1-6, wherein the first apparatus comprises a terminal device and the second apparatus comprises a radio access network device.
8. A second apparatus comprising:
   at least one processor; and
   at least one memory storing instructions that, when executed by the at least one processor, cause the second apparatus at least to:
      receive, from a third apparatus, an indication of an activation for a trajectory collection;
      in accordance with a determination, based on the indication, that respective trajectory of at least one first apparatus is to be collected, transmit, to the at least one first apparatus, a configuration of one or more minimization of drive test, MDT, measurements associated with the trajectory of the first apparatus;
      receive, from the at least one first apparatus, trajectory information collected from the one or more MDT measurements performed by the at least one first apparatus; and
      forward the trajectory information collected from the one or more MDT measurements to the third apparatus.
9. The second apparatus of paragraph 8, wherein the indication of the activation for a trajectory collection indicates at least one of the following:
   a cell level trajectory is required for one or more cells,
   a beam level trajectory is required for one or more beams, or
   both the beam level trajectory and the cell level trajectory are required across the one or more beams for the one or more cell.
10. The second apparatus of paragraph 8 or 9, wherein the configuration of the one or more MDT measurements indicates the first apparatus to perform at least one of:
   an MDT measurement associated with a cell level trajectory related to one or more cells associated with the first apparatus, or
   an MDT measurement associated with a beam level trajectory related to one or more beams associated with of the first apparatus.
11. The second apparatus of any of paragraphs 8-10, wherein the second apparatus is caused to:
   receive, from the first apparatus, the trajectory information collected from MDT measurements associated with a cell level trajectory, the trajectory information comprising at least one of the following:
   one or more cells the first apparatus has visited,
   respective time periods within which the first apparatus is served by the one or more cells,
   location information of the one or more cells.
12. The second apparatus of any of paragraphs 8-10, wherein the second apparatus is caused to:
   receive, from the first apparatus, the trajectory information collected from MDT measurements associated with beam level trajectory, the trajectory information comprising at least one of the following:
   one or more beams the first apparatus has visited,
   respective time periods within which the first apparatus is swept by the one or more beams,
   location information of the one or more beams.
13. The second apparatus of any of paragraphs 8-12, wherein the second apparatus is caused to:
   transmit, to the first apparatus, the configuration of the one or more MDT measurements via a radio resource control signaling.
14. The second apparatus of any of paragraphs 8-13, wherein the second apparatus is caused to:
   receive, from the first apparatus, an indication of an availability of the one or more MDT measurements; and
   transmit, to the first apparatus, a request of retrieving the trajectory information.
15. The second apparatus of any of paragraphs 8-14, wherein the first apparatus is caused to:
   receive, from the third apparatus, an indication of one or more conditions associated with at least one user equipment and/or network specific event; and
   in accordance with a determination that the one or more conditions is satisfied at the at least one first apparatus, determine that respective trajectory of the at least one first apparatus is to be collected.
16. The second apparatus of any of paragraphs 8-15, wherein the first apparatus comprises a terminal device, the second apparatus comprises a radio access network device, and the third apparatus comprises an operation administration and maintenance entity.
17. A third apparatus comprising:
   at least one processor; and
   at least one memory storing instructions that, when executed by the at least one processor, cause the third apparatus at least to:
      transmit, to a second apparatus, an indication of an activation for a trajectory collection; and
      receive, from the second apparatus, trajectory information collected by a first apparatus from one or more minimization of drive test, MDT, measurements associated with the trajectory of the first apparatus.
18. The third apparatus of paragraph 17, wherein the indication of the activation for a trajectory collection indicates at least one of the following:
   a cell level trajectory is required for one or more cells,
   a beam level trajectory is required for one or more beams, or
   both the beam level trajectory and the cell level trajectory are required across the one or more beams for the one or more cell.
19. The third apparatus of paragraph 17 or 18, wherein the trajectory information collected from MDT measurements associated with the cell level trajectory comprises at least one of the following:
   one or more cells the first apparatus has visited,
   respective time periods within which the first apparatus is served by the one or more cells,
   location information of the one or more cells.
20. The third apparatus of paragraph 17 or 18, wherein the trajectory information collected from MDT measurements associated with the beam level trajectory comprises at least one of the following:
   one or more beams the first apparatus has visited,
   respective time periods within which the first apparatus is swept by the one or more beams,
   location information of the one or more beams.
21. The third apparatus of any of paragraphs 17-20, wherein the first apparatus is caused to:
   transmit, to the second apparatus, an indication of one or more conditions associated with at least one user equipment and/or network specific event.
22. The third apparatus of any of paragraphs 17-21, wherein the third apparatus is caused to:
   perform a training of a machine learning model for user equipment trajectory prediction based on the received trajectory information, wherein the input of the machine learning model is the received trajectory information and the output of the machine learning mode is a predicted trajectory in cell level and/or in beam level.
23. The third apparatus of any of paragraphs 17-22, wherein the first apparatus comprises a terminal device, the second apparatus comprises a radio access network device, and the third apparatus comprises an operation administration and maintenance entity.
24. A method comprising:
   receiving, at a first apparatus from a second apparatus, a configuration of one or more minimization of drive test, MDT, measurements associated with a trajectory of the first apparatus;
   performing the one or more MDT measurements at least based on the configuration; and
   transmitting trajectory information collected from the one or more MDT measurements to the second apparatus.
25. A method comprising:
   receiving, at a second apparatus from a third apparatus, an indication of an activation for a trajectory collection;
   in accordance with a determination, based on the indication, that respective trajectory of at least one first apparatus is to be collected, transmit, to the at least one first apparatus, a configuration of one or more minimization of drive test, MDT, measurements associated with the trajectory of the first apparatus;
   receiving, from the at least one first apparatus, trajectory information collected from the one or more MDT measurements performed by the at least one first apparatus; and
   forwarding the trajectory information collected from the one or more MDT measurements to the third apparatus.
26. A method comprising:
   transmitting, from a third apparatus to a second apparatus, an indication of an activation for a trajectory collection; and
   receiving, from the second apparatus, trajectory information collected by a first apparatus from one or more minimization of drive test, MDT, measurements associated with the trajectory of the first apparatus.
27. A first apparatus comprising:
   means for receiving, from a second apparatus, a configuration of one or more minimization of drive test, MDT, measurements associated with a trajectory of the first apparatus;
   means for performing the one or more MDT measurements at least based on the configuration; and
   means for transmitting trajectory information collected from the one or more MDT measurements to the second apparatus.
28. A second apparatus comprising:
   means for receiving, from a third apparatus, an indication of an activation for a trajectory collection;
   means for in accordance with a determination, based on the indication, that respective trajectory of at least one first apparatus is to be collected, transmit, to the at least one first apparatus, a configuration of one or more minimization of drive test, MDT, measurements associated with the trajectory of the first apparatus;
   means for receiving, from the at least one first apparatus, trajectory information collected from the one or more MDT measurements performed by the at least one first apparatus; and
   means for forwarding the trajectory information collected from the one or more MDT measurements to the third apparatus.
29. A third apparatus comprising:
   means for transmitting, to a second apparatus, an indication of an activation for a trajectory collection; and
   means for receiving, from the second apparatus, trajectory information collected by a first apparatus from one or more minimization of drive test, MDT, measurements associated with the trajectory of the first apparatus.
30. A computer readable medium comprising instructions stored thereon for causing an apparatus at least to perform the method of paragraph 24 or the method of paragraph 25 or the method of paragraph 26.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A first apparatus (110) comprising:
at least one processor (910); and
at least one memory (920) storing instructions that, when executed by the at least one processor (910), cause the first apparatus at least to:
receive, from a second apparatus, a configuration of one or more minimization of drive test, MDT, measurements associated with a trajectory of the first apparatus (110);
perform the one or more MDT measurements at least based on the configuration; and
transmit trajectory information collected from the one or more MDT measurements to the second apparatus (120).

2. The first apparatus (110) of claim 1, wherein the configuration of the one or more MDT measurements indicates the first apparatus (110) to perform at least one of:
an MDT measurement associated with a cell level trajectory related to one or more cells associated with the first apparatus (110), or
an MDT measurement associated with a beam level trajectory related to one or more beams associated with of the first apparatus (110).

3. The first apparatus (110) of claim 1 or 2, wherein the first apparatus (110) is caused to:
transmit, to the second apparatus (120), the trajectory information collected from MDT measurements associated with a cell level trajectory, the trajectory information comprising at least one of the following:
one or more cells the first apparatus has visited,
respective time periods within which the first apparatus (110) is served by the one or more cells,
location information of the first apparatus in the one or more cells.

4. The first apparatus (110) of claim 1 or 2, wherein the first apparatus is caused to:
transmit, to the second apparatus (120), the trajectory information collected from MDT measurements associated with the beam level trajectory, the trajectory information comprising at least one of the following:
one or more beams the first apparatus has visited,
respective time periods within which the first apparatus (110) is swept by the one or more beams,
location information of the first apparatus in the one or more beams.

5. The first apparatus (110) of any of claims 1-4, wherein the first apparatus is caused to:
receive, from the second apparatus, the configuration of the one or more MDT measurements via a radio resource control signaling.

6. The first apparatus (110) of any of claims 1-5, wherein the first apparatus is caused to:
transmit, to the second apparatus (120), an indication of an availability of the one or more MDT measurements; and
in response to receiving, from the second apparatus (120), a request of retrieving the trajectory information, transmit the trajectory information to the second apparatus (120).

7. The first apparatus (110) of any of claims 1-6, wherein the first apparatus comprises a terminal device and the second apparatus (120) comprises a radio access network device.

8. A second apparatus (120) comprising:
at least one processor (910); and
at least one memory (920) storing instructions that, when executed by the at least one processor (910), cause the second apparatus (120) at least to:
receive, from a third apparatus (130), an indication of an activation for a trajectory collection;
in accordance with a determination, based on the indication, that respective trajectory of at least one first apparatus (110) is to be collected, transmit, to the at least one first apparatus, a configuration of one or more minimization of drive test, MDT, measurements associated with the trajectory of the first apparatus (110);
receive, from the at least one first apparatus (110), trajectory information collected from the one or more MDT measurements performed by the at least one first apparatus (110); and
forward the trajectory information collected from the one or more MDT measurements to the third apparatus (130).

9. The second apparatus (120) of claim 8, wherein the indication of the activation for a trajectory collection indicates at least one of the following:
a cell level trajectory is required for one or more cells,
a beam level trajectory is required for one or more beams, or
both the beam level trajectory and the cell level trajectory are required across the one or more beams for the one or more cell.

10. The second apparatus (120) of claim 8 or 9, wherein the configuration of the one or more MDT measurements indicates the first apparatus (110) to perform at least one of:
an MDT measurement associated with a cell level trajectory related to one or more cells associated with the first apparatus (110), or
an MDT measurement associated with a beam level trajectory related to one or more beams associated with of the first apparatus (110).

11. The second apparatus (120) of any of claims 8-10, wherein the second apparatus (120) is caused to:
receive, from the first apparatus (110), the trajectory information collected from MDT measurements associated with a cell level trajectory, the trajectory information comprising at least one of the following:
one or more cells the first apparatus (110) has visited,
respective time periods within which the first apparatus (110) is served by the one or more cells,
location information of the one or more cells.

12. A third apparatus (130) comprising:
at least one processor (910); and
at least one memory storing instructions that, when executed by the at least one processor (910), cause the third apparatus (130) at least to:
transmit, to a second apparatus (120), an indication of an activation for a trajectory collection; and
receive, from the second apparatus (120), trajectory information collected by a first apparatus from one or more minimization of drive test, MDT, measurements associated with the trajectory of the first apparatus (110).

13. The third apparatus (130) of claim 12, wherein the indication of the activation for a trajectory collection indicates at least one of the following:
a cell level trajectory is required for one or more cells,
a beam level trajectory is required for one or more beams, or
both the beam level trajectory and the cell level trajectory are required across the one or more beams for the one or more cell.

14. The third apparatus (130) of any of claim 12 or 13, wherein the third apparatus (130) is caused to:
perform a training of a machine learning model for user equipment trajectory prediction based on the received trajectory information, wherein the input of the machine learning model is the received trajectory information and the output of the machine learning mode is a predicted trajectory in cell level and/or in beam level.

15. A method comprising:
receiving, at a first apparatus (110) from a second apparatus (120), a configuration of one or more minimization of drive test, MDT, measurements associated with a trajectory of the first apparatus (110);
performing the one or more MDT measurements at least based on the configuration; and
transmitting trajectory information collected from the one or more MDT measurements to the second apparatus (120).
